# EUROPÄISCHE PATENTSCHRIFT

(11) **EP 1 209 504 B1**
(45) Veröffentlichungstag und Bekanntmachung des Hinweises auf die Patenterteilung: **09.05.2007**
(21) Anmeldenummer: 01124653.5
(22) Anmeldetag: 16.10.2001
(51) Int. Cl.: G02B 21/00, G02B 21/26

(54) **Verfahren und eine Anordnung zur Abtastung mikroskopischer Objekte mit einer Scaneinrichtung**
Method and device for scanning microscopic objects with a scanning system
Méthode et dispositif pour balayer des objets microscopiques avec un système de balayage

(30) Priorität: 23.11.2000 DE 10058100
(43) Veröffentlichungstag der Anmeldung: 29.05.2002
(73) Patentinhaber: Leica Microsystems CMS GmbH, 35578 Wetzlar (DE)
(72) Erfinder: Engelhardt, Johann, Dr., 76669 Bad Schönborn (DE); Knebel, Werner, Dr., 76709 Kronau (DE)
(74) Vertreter: Reichert, Werner Franz

(56) Entgegenhaltungen:
- WO-A-96/37797
- "Three-Dimensional and Multidimensional Microscopy: Image Acquisition and Processing V" PROC. SPIE - INT. SOC. OPT. ENG. (USA), PROCEEDINGS OF THE SPIE - THE INTERNATIONAL SOCIETY FOR OPTICAL ENGINEERING, 1998, SPIE-INT. SOC. OPT. ENG, USA, Bd. 3261, 1998, Seiten 177-184, XP002270445 ISSN: 0277-786X
- STEINER G E ET AL: "Automated data acquisition by confocal laser scanning microscopy and image analysis of triple stained immunofluorescent leukocytes in tissue" JOURNAL OF IMMUNOLOGICAL METHODS, ELSEVIER SCIENCE PUBLISHERS B.V.,AMSTERDAM, NL, Bd. 237, Nr. 1-2, April 2000 (2000-04), Seiten 39-50, XP004192493 ISSN: 0022-1759

## Beschreibung

Die Erfindung betrifft ein Verfahren zur Abtastung mikroskopischer Objekte mit einem Scanmikroskop, insbesondere mit einem konfokalen Scanmikroskop.

Im Besonderen betrifft die Erfindung ein Verfahren zur Abtastung eines auf einem eine x/y-Ebene definierenden Probentisch befindlichen Objekts mit einer Scaneinrichtung, die ein die eine Optik besitzt und ein Scanfeld definiert, das einen zu untersuchenden Objektbereich des Objekts unvollständig umfasst.

Ferner betrifft die Erfindung eine Anordnung zum Untersuchen mikroskopischer Objekte, die größer als das Scanfeld des Mikroskops sind. Im Besonderen betrifft die Erfindung eine Anordnung zur Abtastung mikroskopischer Objekte mit einer Scaneinrichtung, einem eine x/y Ebene definierenden Probentisch, mit dem das mikroskopische Objekt mindestens der x/y-Ebene verschiebbar ist, einem Lichtstrahl, der über ein Scanmodul und eine Optik das Objekt innerhalb eines definierten Scanfeldes abrastert und das von Objekt ausgehende Licht detektiert und einem PC.

Derzeit werden beispielsweise in der Zellbiologie Neuronen mit herkömmlichen Lichtmikroskopen untersucht. Oft sind die Zellen einschließlich ihrer Dendriten größer als die im wesentlichen durch die Öffnungsweite des Objektivs bestimmte Feldgröße des Mikroskops. Mit Objektiven kleiner Vergrößerung lässt sich zwar ein größeres Feld beobachten, jedoch wird damit meist nicht die erforderliche Auflösung erzielt.

Es wird versucht dieses Problem dadurch zu lösen, dass das Bild des Objekts nach und nach von Hand abgezeichnet wird, wobei sukzessive andere Objektteile in das Beobachtungsfeld des konventionellen Mikroskops geschoben werden und jeweils von Hand nachfokussiert wird.

Die Gewinnung einer Gesamtansicht eines im Vergleich zur Feldgröße großen Objekts, beispielsweise eines Neurons mit seinen langen Dendriten, nimmt oft Stunden in Anspruch und ist somit sehr zeitaufwendig und folglich kostenintensiv. Hinzu kommt, dass die Lebensdauer geeignet präparierter Zellen manchmal nur im Bereich von einer bis zwei Stunden liegt, somit sind einige Experimente gar nicht erst durchführbar.

Eine schnellere und genauere Erfassung der Abbildung eines Objektes ist mit Hilfe einer geeigneten Scaneinrichtung möglich. Ebenso kann die Scaneinrichtung durch ein Scanmikroskop gebildet sein. In der Scanmikroskopie wird eine Probe mit einem Lichtstrahl beleuchtet, um das von der Probe emittierte Reflexions- oder Fluoreszenzlicht zu beobachten. Der Fokus des Beleuchtungslichtstrahles wird mit Hilfe einer steuerbaren Strahlablenkeinrichtung, im Allgemeinen durch Verkippen zweier Spiegel, in einer Objektebene bewegt, wobei die Ablenkachsen meist senkrecht aufeinander stehen, so daß ein Spiegel in x-, der andere in y-Richtung ablenkt. Die Verkippung der Spiegel wird beispielsweise mit Hilfe von Galvanometer-Stellelementen bewerkstelligt. Die Leistung des vom Objekt kommenden Lichtes wird in Abhängigkeit von der Position des Abtaststrahles gemessen. Idealer Weise beschreibt die Bahn des Abtastlichtstrahles auf bzw. in dem Objekt einen Mäander. (Abtasten einer Zeile in x-Richtung bei konstanter y-Position, anschließend x-Abtastung anhalten und per y-Verstellung auf die nächste abzutastende Zeile schwenken und dann bei konstanter y-Position diese Zeile in negative x-Richtung abtasten usw.).

Der Abtastbereich eines Scanmikroskops ist jedoch aus prinzipiellen Gründen nicht größer, als der eines konventionellen Lichtmikroskops, das mit vergleichbaren optischen Elementen (Objektiv, Tubuslinse...) ausgerüstet ist. Ein Scanmikroskop bietet jedoch den Vorteil die Bilddaten eines Abtastbereiches zu speichern, um in folgenden Schritten die benachbarten Bereiche abzutasten. Hierbei wird das Objekt mit Hilfe eines Verschiebetisches sukzessive mäanderförmig verschoben. Mit Hilfe einer geeigneten Software werden anschließend die Bilddaten, die zu den einzelnen benachbarten Abtastbereichen korrespondieren, so miteinander verknüpft, dass sie zu einem Gesamtbild zusammensetzt werden können. Meist wird auch hier eine mäanderförmige Aneinanderreihung der Abtastbereiche angestrebt, um Redundanzen zu vermeiden. Der Objekttisch wird zur Durchführung dieser Methode meist automatisch, rechnergesteuert verfahren, bis die gesamte Objektebene abgetastet ist. Eine solche Vorgehensweise ist in Zuschratter, W., Steffen, T., Braun, K., Herzog, A., Michaelis, B. and Scheich, H. (1998), "Acquisition of multiple image stacks with a confocal laser scanning microscope" in Three-Dimensional and Multidimensional Microscopy: Image Acquisition and Processing V Carol J. Cogswell, J.A. Conchello, J.M. Lerner, T Lu, T. Wilson (eds), Proceedings of SPIE Vol. 3261, pp. 177-186, beschrieben.

Die PCT-Anmeldung WO 96/37797 offenbart, dass bei automatisierten Scanmikroskopen Objekte die größer sind als das Bildfeld mit einer Sequenz von X-Y Bildern aufgenommen werden. Die einzelnen Bilder berühren sich an den Kanten.

Bei der Verknüpfung der Bilddaten, die zu den einzelnen benachbarten Abtastbereichen korrespondieren, hat die Software die Aufgabe Bildverzeichnungen, wie beispielsweise Kissenverzeichnungen, zu berücksichtigen. Ein schlichtes "Aneinanderkopieren" der betreffenden Bilddaten reicht im Regelfall nicht aus und führt zu sehr schlechten Ergebnissen. Ganz besonders störend wirkt sich in diesem Zusammenhang ein Winkelfehler zwischen den Verschieberichtungen des Objekttisches und den Scanachsen, der sog. Scherfehler, aus.

Meist handelt es sich bei den abzutastenden Objekten nicht um flache, sondern um dreidimensionale Objekte, was insbesondere die Dokumentation durch manuelles Abzeichnen deutlich erschwert und manchmal zu unbefriedigenden Ergebnissen führt.

Denkbar ist zunächst, ein konfokales Rastermikroskop einzusetzen, das von sich aus in der Lage ist, ein Objekt dreidimensional abzutasten. In der konfokalen Scanmikroskopie wird ein Objekt mit dem Fokus eines Lichtstrahles in drei Dimensionen abgetastet. Ein konfokales Rastermikroskop umfasst im allgemeinen eine Lichtquelle, eine Fokussieroptik, mit der das Licht der Quelle auf eine Lochblende - die sog. Anregungsblende - fokussiert wird, einen Strahlteiler, eine Strahlablenkeinrichtung zur Strahlsteuerung, eine Optik, eine Detektionsblende und die Detektoren zum Nachweis des Detektions- bzw. Fluoreszenzlichtes. Das Beleuchtungslicht wird über einen Strahlteiler eingekoppelt. Das vom Objekt kommende Fluoreszenz- oder Reflexionslicht gelangt über die Strahlablenkeinrichtung zurück zum Strahlteiler, passiert diesen, um anschließend auf die Detektionsblende fokussiert zu werden, hinter der sich die Detektoren befinden. Detektionslicht, das nicht direkt aus der Fokusregion stammt, nimmt einen anderen Lichtweg und passiert die Detektionsblende nicht, so daß man eine Punktinformation erhält, die durch sequentielles. Abtasten des Objekts zu einem dreidimensionalen Bild führt. Meist wird ein dreidimensionales Bild durch schichtweise Bilddatennahme erzielt. Dabei wird ein Scanfeld, das durch die Fokusieroptik festgelegt wird, durch eine Relativbewegung zwischen dem Probentisch und der Fokusieroptik entsprechend verfahren. Mittels dieser Relativbewegung erreicht man, dass das Scanfeld durch das zu untersuchende Objekt in z-Richtung bewegt wird.

Da auch der horizontale Querschnitt des Abtastvolumens eines konfokalen Rastermikroskops bei Verwendung vergleichbarer Optik prinzipiell nicht größer, als die Feldgröße eines konventionellen Lichtmikroskops ist, wird die prinzipielle Schwierigkeit der Abtastung von Objekten, die größer als die Scanfeldgröße sind, allein durch die Verwendung eines konfokalen Rastermikroskops nicht gelöst.

Auch in der konfokalen Scanmikroskopie ist es möglich und üblich durch mäanderförmiges Verschieben des Objektes, Bildinformation von dem Objekt zu erhalten, die größer ist als das verwendete Scanfeld. Pro Scanfeld erfolgt die Abtastung in verschiedenen Schichten und anschließend werden die gewonnenen Bilddaten zu einem zusammenhängenden Bild verknüpft. Die Bilddaten umfassen den gesamten das Objekt beinhaltenden Raum. Es ist leicht vorzustellen, dass bei sich stark im Raum verzweigenden Objekten auch viel unnötiger, keine Bildinformation enthaltender Raum gescannt wird. Bei der Abtastung geht Zeit verloren, da unnötiger Weise Bereiche gescannt werden, die keine Bildinformation des Objekts enthalten.

Die beschriebenen scanmikroskopischen Methoden sind genauso, wie die Methode des manuellen Abzeichnens sehr zeitaufwendig. Ferner sind die Ergebnisse der Bilddatenverknüpfung aufgrund der mangelnden Berücksichtigung von Bildfehlern nicht befriedigend.

Der Erfindung liegt die Aufgabe zugrunde ein Verfahren zu schaffen, dass die schnelle und effiziente Abtastung von Objekten ermöglicht, die größer als der Abtastbereich eines Mikroskops sind, wobei die Abtastung innerhalb der Lebensdauer des Objekts abgeschlossen sein soll.

Die objektive Aufgabe wird gelöst durch ein Verfahren, das die die Merkmale des Anspruchs 1 umfasst.

Eine weitere Aufgabe der Erfindung ist es, eine Anordnung zu schaffen, mit der es möglich ist, größere mikroskopische Objektbereiche schnell und effizient abzutasten. Ferner soll die Anordnung die derart ausgestaltet sein, dass die Bilderfassung während der begrenzten Lebensdauer biologische Präparate möglich ist.

Obige Aufgabe wird gelöst durch eine Anordnung, die die Merkmale des Anspruchs 5 umfasst.

Ein Vorteil der Erfindung ist es, dass Objekte, die größer sind als ein aktuelles Scanfeld effektiv und schnell erfasst werden können. Dabei ist es von besonderer Bedeutung, dass die Erfindung derart ausgelegt ist, dass mehrere Scanfelder über einen zu untersuchenden Probenbereich verteilt werden. Bei der Verteilung ist darauf zu achten, dass jedes Scanfeld mindestens einen Teil des zu untersuchenden Objekts einschließt. Das Abtasten des zu untersuchenden Objektbereichs beschränkt sich ausschließlich auf Objektstrukturen. Scanfelder, die keine Objektstrukturen enthalten, werden von dem Scanvorgang nicht erfasst. Dies führt zu einer erheblichen Zeitersparnis, da keine Felder gescannt werden die lediglich Hintergrundinformation enthalten. Der erfindungsgemäße Scanvorgang beschränkt sich ausschließlich auf Information enthaltende Scanfelder. Der Benutzer umfährt mit einem Kennzeichnungsmittel den zu untersuchenden Objektbereich auf dem Display. Die Vielzahl der Scanfelder, die notwendig sind um den eingeschlossenen Objektbereich zu erfassen, wird automatisch verteilt.

In der Zeichnung ist der Erfindungsgegenstand schematisch dargestellt und wird anhand der Figuren nachfolgend beschrieben. Dabei zeigen:
- Fig. 1: eine erfindungsgemäße Anordnung mit einem Konfokalmikroskop das die Erfindung verwendet;
- Fig. 2: eine spezielle Ausführungsform der erfindungsgemäßen Anordnung mit einem Konfokalmikroskop, das eine manuelle Tischverstellung umfasst,
- Fig. 3: eine schematische Darstellung des Abtastvorganges gemäß einer Ausführungsform der Erfindung, und
- Fig. 4: eine schematisch Darstellung des Abtastvorganges gemäß weiteren Ausführungsform der Erfindung.

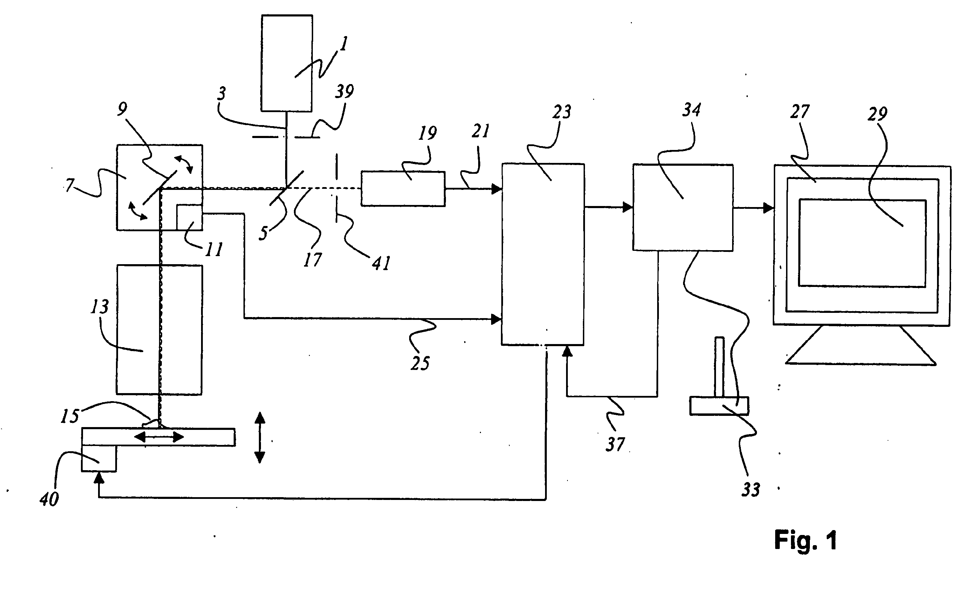

***Fig. 1*** zeigt eine schematische Darstellung einer Scaneinrichtung. In einer besonderen Ausgestaltung der Erfindung ist die Scaneinrichtung ein konfokales Scanmikroskop. Es ist selbstverständlich, dass zum Abrastern einer Probe nicht unbedingt ein komplett ausgestattetes Scanmikroskop erforderlich ist. Vielmehr reicht es aus die notwendigen optischen Komponenten für einen Scanvorgang in geeigneter Weise zu haltern bzw. zu positionieren. Die nachfolgende Beschreibung bezieht sich ausschließlich auf ein Scanmikroskop, was jedoch in keiner Weise als Beschränkung der Erfindung aufzufassen ist. Der von einem Beleuchtungssystem 1 kommende Lichtstrahl 3 wird von einem Strahlteiler 5 zum Scanmodul 7 reflektiert, das einen kardanisch aufgehängten Scanspiegel 9 beinhaltet, der den Strahl durch die Optik 13 hindurch über bzw. durch das Objekt 15 führt. Der Lichtstrahl 3 wird bei nicht transparenten Objekten 15 über die Objektoberfläche geführt. Bei biologischen Objekten 15 (Präparaten) oder transparenten Objekten kann der Lichtstrahl 3 auch durch das Objekt 15 geführt werden. Dies bedeutet, dass aus verschiedenen Fokusebenen des Objekts nacheinander durch den Lichtstrahl 3 abgetastet werden. Die nachträgliche Zusammensetzung ergibt dann ein dreidimensionales Bild des Objekts. Der vom Beleuchtungssystem 1 kommende Lichtstrahl 3 ist in allen Abbildungen (Fig. 1 bis Fig. 2) als durchgezogene Linie dargestellt. Das vom Objekt 15 ausgehende Licht 17 gelangt durch die Optik 13 und über das Scanmodul 7 zum Strahlteiler 5, passiert diesen und trifft auf Detektor 19, der als Photomultiplier ausgeführt ist. Das vom Objekt 15 ausgehende Licht 17 ist in allen Abbildungen (Fig. 1 bis Fig. 2) als gestrichelte Linie dargestellt. Im Detektor 19 werden elektrische, zur Leistung des vom Objekt ausgehenden Lichtes 17 proportionale Detektionssignale 21 erzeugt und an die Verarbeitungseinheit 23 weitergegeben. Die im Scanmodul mit Hilfe eines induktiv oder kapazitiv arbeitenden Positionssensors 11 erfassten Positionssignale 25 werden ebenfalls an die Verarbeitungseinheit 23 übergeben. Es ist für einen Fachmann selbstverständlich, dass die Position des Scanspiegels 9 auch über die Verstellsignale ermittelt werden kann. Die eingehenden, Analogsignale werden in der Verarbeitungseinheit 23 zunächst digitalisiert.

Die Positions- und Detektionssignale werden in der Verarbeitungseinheit 23 einander zugeordnet und zu einem Abbild 29 zusammengesetzt, das auf dem Display 27 angezeigt wird. Das bei einem konfokalen Scanmikroskop üblicherweise vorgesehene Beleuchtungspinhole 39 und das Detektionspinhole 41 sind der Vollständigkeit halber schematisch eingezeichnet. Weggelassen sind wegen der besseren Anschaulichkeit hingegen einige optische Elemente zur Führung und Formung der Lichtstrahlen. Diese sind einem auf diesem Gebiet tätigen Fachmann hinlänglich bekannt.

Mit Hilfe des Joysticks 33 kann der Benutzer vorgeben in welche Raumrichtung der Probentisch 35 verfahren wird. Die Solldaten werden vom PC 34, an dem der Joystick angeschlossen ist, an die Steuereinheit 23 übergeben, die dann den Tisch mit Hilfe der Verstelleinrichtung 40 entsprechend verfährt. Die Verstelleinrichtung 40 beinhaltet drei nicht gezeigte Verstellmotoren, die den Probentisch 35 in jede Raumrichtung bewegen können. Die über den Joystick eingegebenen Solldaten werden vom PC 34 bei der Erstellung des Abbildes 29 berücksichtigt. Die Vorrichtung ist so ausgestaltet, dass der Probentisch 35 nach einem bestimmten Verstellweg anhält und die weitere Eingabe von Solldaten mit dem Joystick bis zum vollständigen Abscannen an der eingestellten Position verhindert. Erst nach dem vollständigen Abscannen an der eingestellten Position kann der Tisch erneut positioniert werden. Alle gewonnenen Bilddaten werden im PC 34 in einem Gesamtbilddatensatz gespeichert.

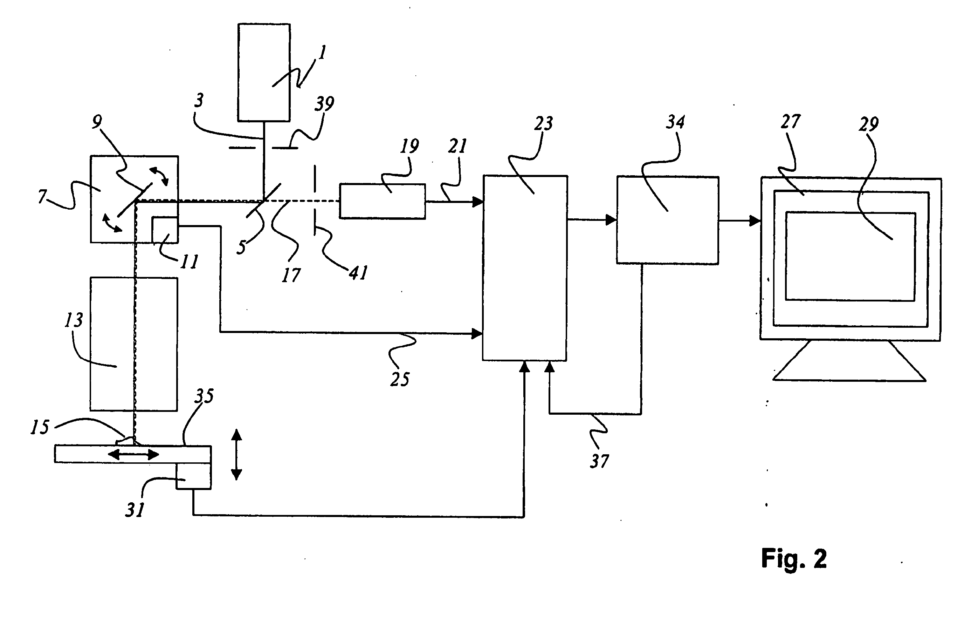

***Fig. 2*** zeigt eine zu Fig. 1 analoge Ausgestaltung mit manueller Tischsteuerung. Der Probentisch 35 wird mit Hilfe der üblichen, hier nicht gezeigten Verfahrschrauben, bewegt. Die Position des Probentisches 35 wird ständig mit Hilfe des Tischpositionssensors 31 erfasst und an die Steuereinheit 23 weitergeleitet. Ein Verfahren des Probentisches 35 ist immer möglich, wobei die Abrasterung ununterbrochen weiter durchgeführt wird. Verzerrungen, die durch das Verfahren des Probentisches hervorgerufen würden, werden vom PC 34 korrigiert.

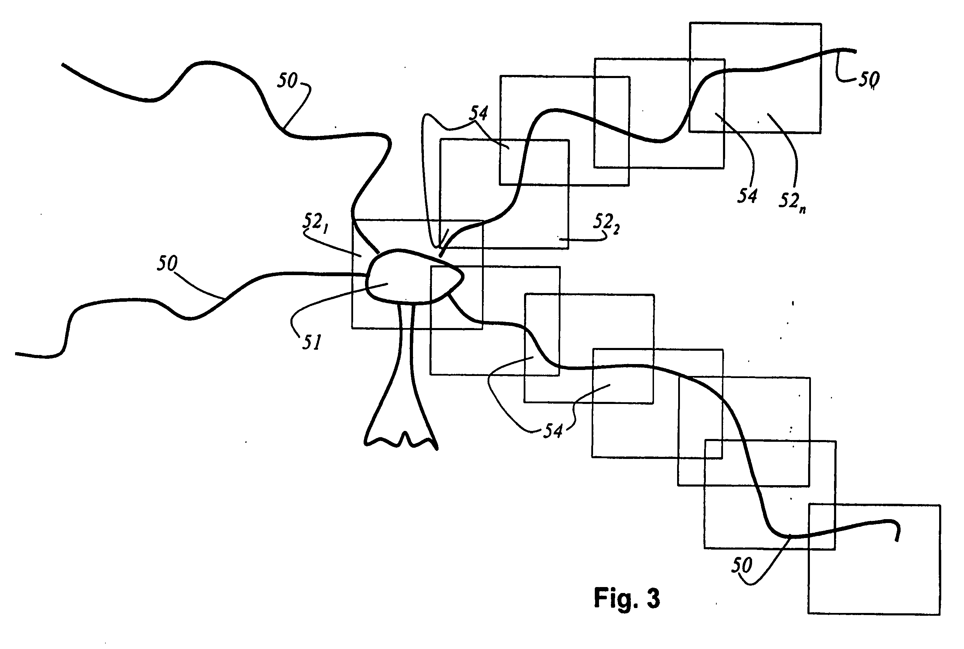

***Fig. 3*** zeigt schematisch einen Ablauf des Verfahrens. Gezeigt ist eine Zelle 51 mit Dendriten 50. Zunächst wird ein erstes Scanfeld 52₁ abgescannt. Dann wählt der Benutzer einen weiteren Scanbereich, der anschließend abgescannt wird. Der Überlappungsbereich 54 wird folglich zwei mal abgescannt, was bei der Bilddatenverarbeitung zur optimalen Zuordnung von Positions- und Detektionsdaten der beiden Scanfelder 52₁ und 52₂ führt. Der Benutzer kann mit einer Vielzahl von Scanfeldem 52₁, 52₂ und 52ₙ einen zu untersuchenden Objektbereich 55 überdecken. Aus den einzelnen Scanfeldem 52₁, 52₂ und 52ₙ wird ein Gesamtbild zusammengesetzt. Wie bereits oben erwähnt, werden die Scanfelder Überlappungsbereich 54 der jeweiligen Scanfelder zweimal gescannt, was zu einer optimalen Zuordnung von den Positions- und Detektionsdaten führt.

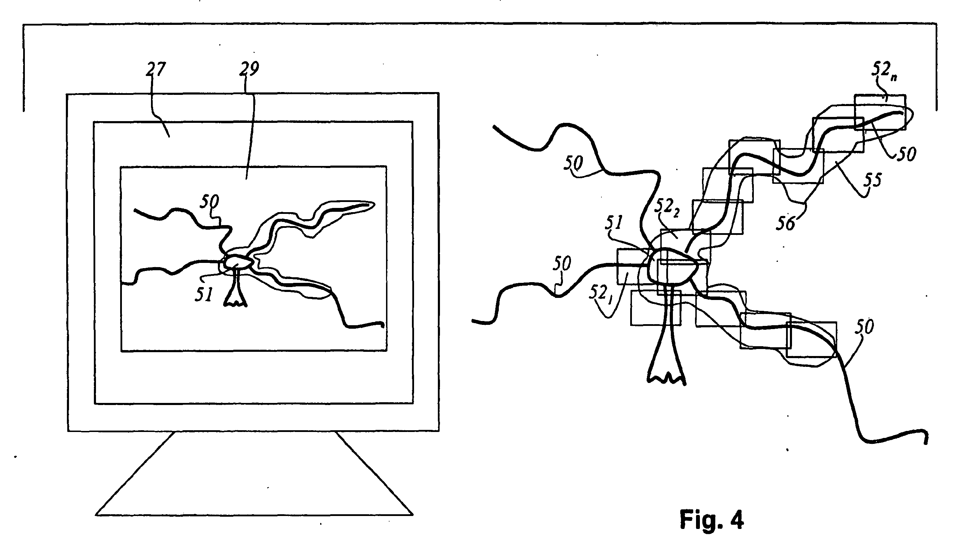

***Fig. 4*** zeigt eine weitere Ausführungsform zum Scannen eines untersuchenden Objektbereich 55. Der zu untersuchende Objektbereich 55 wird mittels eines Kennzeichnungsmittel, wie z.B. dem Joystick 33, festgelegt. Dabei wird mit dem Kennzeichnungsmittel der zu untersuchende Objektbereich 55 umfahren, wodurch eine Grenzlinie 56 festgelegt wird, innerhalb der die Vielzahl der Scanfelder 52₁, 52₂ und 52ₙ automatisch verteilt werden. Dadurch werden die interessierenden Strukturen von der Vielzahl der Scanfelder 52₁, 52₂ und 52ₙ umschlossen.

## Patentansprüche

1. Verfahren zur Abtastung eines auf einem eine X/Y-Ebene definierenden Probentisch (35) befindlichen mikroskopischen Objekts (15) mit einer Scanneinrichtung, die eine Optik (13) besitzt und ein Scannfeld (52) definiert, das einem zu untersuchenden Objektbereich (55) des Objekts (15) unvollständig umfasst, **gekennzeichnet durch** die folgenden Schritte:
- Umfahren des zu untersuchenden Objektbereichs (55) mit einem Kennzeichnungsmittel, wobei der zu untersuchende Objektbereich (55) durch eine mittels des Kennzeichnungsmittels auf einem Display (27) bestimmte Grenzlinie (56) umschlossen wird,
- automatisches Verteilen einer Vielzahl von Scannfelder (52₁, 52₂, ... 52_{N}) mittels eines PCs (34) anhand der Grenzlinie (56), wobei die Scannfelder (52₁, 52₂ ... 52_{N}) derart auf den zu untersuchenden Objektbereich (55) verteilt werden, damit die im zu untersuchenden Objektbereich (55) vorhandenen Objektstrukturen innerhalb der Vielzahl der Scannfelder (52₁, 52₂, ... 52_{N}) zu liegen kommen,
- automatisches Verfahren des Probentisches (35) in der X/Y-Ebene, so dass der zu untersuchende und **durch** die Grenzlinie (56) eingeschlossene Objektbereich (55) **durch** die Vielzahl der Scannfelder (52₁, 52₂, ... 52_{N}) erfasst wird, wobei jeweils zwei aufeinander folgende und Objektstrukturen enthaltene Scannfelder einen Übedappupgsbereich (54) bilden, der somit zweimal gescannt wird, und
- Verknüpfen und zuordnen der aus der Vielzahl der Scannfelder (52₁, 52₂, ... 52_{N}) gewonnenen Positions- und Detektionsdaten mittels des Überlappungsbereichs (54).

2. Verfahren nach einem der Anspruch 1, **dadurch gekennzeichnet, dass** eine Z-Richtung senkrecht zur X/Y-Ebene definiert ist und dass die Verschiebung eines jeden Scannfeldes (52₁, 52₂, ... 52_{N}) in Z-Richtung durch eine Relativbewegung zwischen dem Probentisch (35) und der Optik (13) erzielt wird, wobei die Verschiebung des Scannfeldes (52₁, 52₂, ... 52_{N}) in Z-Richtung ausschließlich innerhalb des durch die Grenzlinie (56) eingeschlossenen Objektbereichs (55) erfolgt.

3. Verfahren nach Anspruch 1, **dadurch gekennzeichnet, dass** die Größe des Scannfeldes (52₁, 52₂, ... 52_{N}) durch die Optik (13) der Scanneinrichtung bestimmt ist.

4. Verfahren nach einem der vorangehenden Ansprüche 1 bis 3, **dadurch gekennzeichnet, dass** die Scanneinrichtung durch ein Scannmikroskop gebildet ist.

5. Anordnung zur Abtastung mikroskopischer Objekte (15) mit einer Scanneinrichtung, einem eine X/Y-Ebene definierenden Probentisch (35) mit dem das mikroskopische Objekt (15) in der X/Y-Ebene verschiebbar ist, einem Lichtstrahl (3), der über ein Scannmodul (7) und eine Optik (13) das Objekt (15) innerhalb eines definierten Scannfeldes (52) abrastert und das vom Objekt (15) ausgehende Licht (17) detektiert und einem PC (34) mit Display (27) zuführt, **dadurch gekennzeichnet, dass** ein Kennzeichnungsmittel vorhanden ist, um einen zu untersuchenden und Objektstrukturen enthaltenen Objektbereich (55) durch Umfahren auf dem Display über eine Grenzlinie (56) festzulegen, wobei die Grenzlinie (56) den Objektbereich (55) und die im Objektbereich (55) vorhandenen Objektstrukturen umschließt, dass eine Vielzahl von Scannfeldem (52₁, 52₂, ... 52_{N}) zur Erfassung des durch die Grenzlinie (56) eingeschlossenen Objektbereichs (55) mit den vorhandenen Objektstrukturen notwendig ist, wobei der PC (34) die Vielzahl der Scannfelder (52₁, 52₂, ... 52_{N}) automatisch innerhalb der Grenzlinie verteilt, dass das einzelne Scannfeld (52) kleiner ist, als der zu untersuchende Objektbereich (55) mit den enthaltenen Objektstrukturen, und das Mittel (23, 31) vorhanden sind, die den Probentisch (35) derart automatisch verfahren, das die Vielzahl der entsprechenden Scannfelder (52₁, 52₂, ... 52_{N}) den gesamten von der Grenzlinie (56) eingeschlossenen und interessierenden Objektbereich (55) derart überdecken, dass jeweils zwei aufeinander folgende Scannfelder (52₁, 52₂, .... 52_{N}) einen Überlappungsbereich (54) bilden, so dass die im interessierenden Objektbereich (55) angeordneten Scannfelder (52₁, 52₂, ... 52_{N}) immer eine Objektstruktur enthalten, und das der PC (34) anhand des jeweiligen Überlappungsbereich (54) die einzelnen Scannfelder zu einem Gesamtbild der Objektstruktunen zusammensetzt.

6. Anordnung nach Anspruch 5, **dadurch gekennzeichnet, dass** der PC (34) anhand der automatisch verteilten Scannfelder (52₁, 52₂, ... 52_{N}) Verstelldaten ermittelt, die an die Steuereinheit (23) übergebbar sind, welche den Probentisch (35) entsprechend verfährt

7. Anordnung nach einem der Ansprüche 5 bis 6, **dadurch gekennzeichnet, dass** eine Z-Richtung senkrecht zur X/Y-Ebene definiert ist, und das die Verschiebung eines jeden Scannfeldes (52₁, 52₂ ... 52_{N}) in Z-Richtung durch eine Relativbewegung zwischen dem Probentisch (35) und der Optik (13) innerhalb des durch die Grenzlinie (56) eingeschlossenen Objektbereiches (55) erzielbar ist.

8. Anordnung nach Anspruch 5, **dadurch gekennzeichnet, dass** die Größe des Scannfeldes durch eine Optik (13) der Scanneinrichtung bestimmt ist

## Claims

1. Method for scanning of a microscopic object (15) positioned on a specimen stage (35) defining a X/Y-plane, using a scanning device, having an optic (13) and defining a scanning field (52), which incompletely covers an object region (55) of the object (15) to be examined, **characterised by** the following steps:
- circumscribing the object region (55) to be examined with a marking device, whereby the object region (55) to be examined is enclosed by a borderline (56) determined by the marking device on a display (27);
- automatic distribution of a plurality of scanning fields (52₁, 52₂ ... 52_{N}) using a PC (34) on the basis of the borderline (56), whereby the scanning fields (52₁, 52₂ ... 52_{N}) are distributed in the object region to be examined (55) in such a way that the object structures within the object region (55) to be examined are covered by the plurality of scanning fields (52₁, 52₂ ... 52_{N});
- automatic moving the specimen stage (35) in the X/Y-plane, so that the object region (55), which is to be examined and is enclosed by the borderline (56) is covered by the plurality of scanning fields (52₁, 52₂ ... 52_{N}), whereby respectively two successive scanning fields containing object structures form a region of overlap (54), which is therefore scanned twice, and
- connecting and allocating of the position and detection data gained from the plurality of scanning fields (52₁, 52₂ ... 52_{N}) using the overlapping range (64).

2. Method according to claim 1, **characterised in that** a Z-direction is defined perpendicular to the X/Y-plane and in which displacement of every scanning field (52₁, 52₂ ... 52_{N}) along the Z-direction is achieved by relative motion between the specimen stage (35) and the optic (13), whereby displacement of the scanning field (52₁, 52₂ ... 52_{N}) along the Z-direction only takes place within the object region (55) enclosed within the borderline (56).

3. Method according to claim 1, **characterised in that** the size of the scanning field (52₁, 52 ₂ ... 52_{N}) is defined by the optic (13) of the scanning device.

4. Method according to the previous claims 1 to 3, **characterised in that** the scanning device is formed by a scanning microscope.

5. Device for the scanning microscopic objects (15) with, a scanning device, a specimen stage (35) definies a X/Y-plane, with which the microscopic object (15) is displaced in the X/Y-plane, a beam of light (3) scans the object (15) within a defined scanning field (52) using a scanning module (7) and an optic (13) and detects the light (17) emitted from the object (15) and transmits it to a PC (34) having a display (27), **characterised in that** a marking device is available in order to define an object region (55) to be examined and containing object structures by circumscribing the object region on a display using a borderline (56), whereby the borderline (56) encloses the object region (55) and the object structures contained in the object region (55), so that a plurality of scanning fields (52₁, 52₂ ... 52_{N}) are required to cover the object region (55) with the object structures enclosed by the borderline (56), whereby the PC (34) automatically distributes the plurality of scanning fields (52₁, 52₂ ... 52_{N}) within the borderline, wherein the individual scanning field (52) is smaller than the object region (55) to be examined containing the object structures and wherein means (23, 31) are available for automatically moving the specimen stage (35) in such a way that the plurality of the corresponding scanning fields (52₁, 52₂ ... 52_{N}) cover the entire interesting object region (55) enclosed by the borderline (56), so that two successive scanning fields (52₁, 52₂ ... 52_{N}) form a region of overlap (54), so that the scanning fields (52₁, 52 ₂ ... 52_{N}) arranged within the object region (55) of interest always contain an object structure, and that the PC (34) combines the individual scanning fields to form an overall image of the object structures on the basis of each region of overlap (54).

6. Device according to claim 5, **characterised in that** the PC (34) determines displacement data on the basis of the automatically distributed scanning fields (52₁, 52 ₂ ... 52_{N}), which are transmitted to the control unit (23), which moves the specimen stage (35) accordingly.

7. Arrangement according to one of the claims 5 to 6, **characterised in that** a Z-direction is defined perpendicular to the X/Y-plane, and in which displacement of every scanning field (52₁, 52₂ ... 52_{N}) along the Z-direction is achieved by relative motion between the specimen stage (35) and the optic (13), whereby displacement of the scanning field (52₁, 52₂ ... 52_{N}) along the Z-direction only takes place within the object region (55) enclosed within the borderline (56).

8. Device according to claim 5, **characterised in that** the size of the scanning field is determined by an optic (13) in the scanning device.

## Revendications

1. Méthode de palpage d'un objet microscopique (15) se trouvant sur une table d'échantillonnage définissant un plan X/Y (35) à l'aide d'un dispositif de numérisation, qui possède une optique (13) et définit un champ de numérisation (52) qui comprend entièrement une zone de l'objet à étudier (55) de l'objet (15), **caractérisé par** les opérations suivantes :
- contournement de la zone de l'objet à étudier (55) à l'aide d'un outil de caractérisation, la zone de l'objet à étudier (55) étant entourée par une certaine ligne de limite (56) déterminée sur un écran (27) au moyen de l'outil de caractérisation ;
- répartition automatique des champs de numérisation (52₁, 52₂ ... 52_{N}) au moyen d'un ordinateur (34) à l'aide de la ligne de limite (56), les champs de numérisation (52₁, 52₂ ... 52_{N}) étant répartis sur la zone de l'objet à étudier (55) de manière à ce que les structures de l'objet existantes dans la zone de l'objet à étudier (55) puissent se situer au sein de la multitude des champs de numérisation (52₁, 52₂ ... 52_{N}) ;
- déplacement automatique de la table d'échantillonnage (35) sur le plan X/Y de manière à ce que la zone de l'objet à étudier (55) restreinte par la ligne de limite (56) soit saisie par la multitude des champs de numérisation (52₁, 52₂ ... 52_{N}), deux champs de numérisation se succédant et contenant les structures de l'objet formant à chaque fois une zone de chevauchement (54) qui est numérisé en conséquence deux fois ;
- association et affectation des données de position et de détection obtenues à partir de la multitude des champs de numérisation (52₁, 52₂ ... 52_{N}) au moyen de la zone de chevauchement (64).

2. Méthode selon un procédé de la demande 1, **caractérisé par le fait qu'**une direction Z est définie perpendiculairement au plan X/Y et que le décalage de chaque champ de numérisation (52₁, 52₂ ... 52_{N}) est réalisé en direction Z par un déplacement relatif entre la table d'échantillonnage (35) et l'optique (13), le décalage du champ de numérisation (52₁, 52₂ ... 52_{N}) s'effectuant en direction Z exclusivement au sein de la zone de l'objet (55) restreinte par la ligne de limite (56).

3. Méthode selon la demande 1, **caractérisé par le fait que** la dimension du champ de numérisation (52₁, 52 ₂ ... 52_{N}) est déterminée par l'optique (13) du dispositif de numérisation.

4. Méthode selon une des demandes précédentes 1 à 3, **caractérisé par le fait que** le dispositif de numérisation est formé par un microscope de numérisation.

5. Dispositif pour le palpage d'objets microscopiques (15) avec un dispositif de numérisation, une table d'échantillonnage définissant un plan X/Y (35), avec laquelle l'objet microscopique (15) peut être décalé sur le plan X/Y, un faisceau lumineux (3), qui balaye l'objet (15) via un module de numérisation (7) et une optique (13) au sein d'un champ de numérisation défini (52), qui détecte la lumière émise (17) par l'objet (15) et l'envoie à un ordinateur (34) avec écran (27) ; **caractérisée par le fait qu'**un outil de caractérisation existe pour déterminer à l'écran via une ligne de limite (56) par contournement une zone de l'objet à étudier et contenant les structures de l'objet (55), la ligne de limite (56) entourant la zone de l'objet (55) et les structures de l'objet existantes dans la zone de l'objet (55), **par le fait qu'**une multitude de champs de numérisation (52₁, 52₂ ... 52_{N}) est nécessaire pour détecter la zone de l'objet (55) restreinte par la ligne de limite (56) avec les structures de l'objet existantes, l'ordinateur (34) répartissant automatiquement au sein de la ligne de limite la multitude des champs de numérisation (52₁, 52₂ ... 52_{N}), **par le fait que** chaque champ de numérisation (52) est plus petit que la zone de l'objet à étudier (55) avec les structures de l'objet contenues, et **par le fait que** les outils (23, 31) existent, ceux-là qui déplacent la table d'échantillonnage (35) automatiquement de manière à ce que la multitude des champs de numérisation correspondants (52₁, 52 ₂ ... 52_{N}) recouvrent l'ensemble de la zone de l'objet (55) étant intéressante et restreinte par la ligne de limite (56) de manière à ce que deux champs de numérisation se succédant (52₁, 52₂ ... 52_{N}) forment une zone de chevauchement (54) pour que les champs de numérisation (52₁, 52 ₂ ... 52_{N}) disposés dans la zone de l'objet intéressante (55) contiennent toujours une structure de l'objet et pour que l'ordinateur (34) assemble au moyen de la zone de chevauchement correspondante (54) les différents champs de numérisation en une image complète des structures de l'objet.

6. Dispositif selon la demande 5, **caractérisée par le fait que** l'ordinateur (34) détermine au moyen des champs de numérisation répartis automatiquement (52₁, 52 ₂ ... 52_{N}) les données de réglage qui peuvent être transmises à une unité de commande (23) qui déplace en conséquence la table d'échantillonnage (35).

7. Dispositif selon une des demandes 5 à 6, **caractérisée par le fait qu'**une direction Z est définie perpendiculairement au plan X/Y et que le décalage de chaque champ de numérisation (52₁, 52 ₂ ... 52_{N}) peut être obtenu en direction Z par un mouvement relatif entre la table d'échantillonnage (35) et l'optique (13) au sein de la zone de l'objet (55) restreinte par la ligne de limite (56).

8. Dispositif selon la demande 5, **caractérisée par le fait que** la dimension du champ de numérisation est déterminée par une optique (13) du dispositif de numérisation.
